# EUROPÄISCHE PATENTSCHRIFT

(11) **EP 3 540 380 B1**
(45) Veröffentlichungstag und Bekanntmachung des Hinweises auf die Patenterteilung: **23.06.2021**
(21) Anmeldenummer: 18161345.6
(22) Anmeldetag: 13.03.2018
(51) Int. Cl.: G01D 18/00, G01V 8/20

(54) **ÜBERWACHUNGSANORDNUNG FÜR EINE ANLAGE**
MONITORING ARRANGEMENT FOR A PLANT
DISPOSITIF DE SURVEILLANCE POUR UNE INSTALLATION

(43) Veröffentlichungstag der Anmeldung: 18.09.2019
(73) Patentinhaber: Leuze electronic GmbH + Co. KG, 73277 Owen/Teck (DE)
(72) Erfinder: Schreiber, Frank, 72574 Bad Urach (DE); Jüttner, Andreas, 81543 München (DE); Brunner, Rolf, 82223 Eichenau (DE); Feller, Bernhard, 86316 Friedberg (DE); Heckmayr, Alexander, 86807 Buchloe (DE); Pelzer, Reiner, 73035 Göppingen (DE)
(74) Vertreter: Ruckh, Rainer Gerhard

(56) Entgegenhaltungen:
- EP-A2- 2 631 681
- EP-A2- 2 631 682
- WO-A1-2008/135495
- DE-A1-102009 040 384

## Beschreibung

Die Erfindung betrifft eine Überwachungsanordnung für eine Anlage.

Derartige Überwachungsanordnungen weisen allgemein wenigstens einen optischen Sensor auf, der für Überwachungsaufgaben an der Anlage eingesetzt wird. Die Anlage kann in verschiedensten Ausprägungen ausgebildet sein. Insbesondere schließt der Begriff Anlage allgemein Arbeitsmittel wie Maschinen oder Roboter mit ein.

Die Überwachungsanordnung umfasst neben einem optischen Sensor auch eine Steuerung, mittels derer der Betrieb der Anlage gesteuert wird. Zweckmäßig erfolgt eine Steuerung in Abhängigkeit der mit dem optischen Sensor generierten Ausgangssignale. Hierzu ist der optische Sensor mit der Anlage über die Steuerung verbunden.

Die Überwachungsanordnung wird insbesondere für Anwendungen im Bereich der Sicherheitstechnik eingesetzt. In diesem Fall wird mit dem optischen Sensor ein Überwachungsbereich überwacht, der von einem Gefahrenbereich an der Anlage gebildet ist. Wird mit dem optischen Sensor ein gefahrbringender Eingriff in dem Überwachungsbereich, beispielsweise durch eine Person, registriert, generiert der optische Sensor ein Ausgangssignal, das an die Steuerung übertragen wird, so dass diese die Anlage aus Sicherheitsgründen abschaltet.

Bei derartigen Überwachungsanordnungen erfolgt die komplette Signalauswertung von Sensorsignalen, die von Sensorkomponenten des optischen Sensors generiert werden, im optischen Sensor selbst. Das dadurch generierte Ausgangssignal kann dann von der Steuerung direkt zum Ansteuern der Anlage verwendet werden, insbesondere zum Abschalten der Anlage.

Nachteilig bei derartigen Überwachungsanordnungen ist, dass eine Anpassung des optischen Sensors, insbesondere der Auswertung von Sensorsignalen, an sich verändernde Anforderungen nicht oder nur eingeschränkt möglich ist.

Prinzipiell könnten die Sensorsignale des optischen Sensors unverarbeitet an die Steuerung ausgegeben werden, wo dann eine an die jeweiligen Anforderungen angepasste Auswertung möglich wäre. Dies ist jedoch deshalb nicht möglich, da die serielle Übertragungsstrecke keine hohen Datenmengen übertragen kann, so dass dadurch die Reaktionszeiten für die Auswertung von Sensorsignalen in der Steuerung unerwünscht hoch wären.

Die WO 2008/135495 A1 betrifft eine Messanordnung mit einer Messeinheit zur Erfassung einer Betriebsgröße einer Maschine und mit einer mittels einer bidirektionalen digitalen Datenverbindung an die Messeinheit angeschlossenen Steuereinheit zur Steuerung der Maschine, wobei die Messeinheit Sensormittel zur Erfassung mindestens eines analogen Messsignals für die Betriebsgröße und eine Auswerteeinheit zur Digitalisierung und Auswertung des analogen Messsignals sowie eine Überwachungseinheit zur Schwellwertüberprüfung des analogen Messsignals umfasst. Die Datenverbindung ist zur Übertragung von der Auswerteeinheit und der Überwachungseinheit ermittelter digitaler Mess- bzw. Überwachungsinformationen von der Messeinheit zu der Steuereinheit und zur Übertragung eines digitalen Steuerbefehls zur Einleitung eines Selbsttests der Überwachungseinheit von der Steuereinheit zu der Messeinheit ausgelegt.

Weiterhin sind Modifikationsmittel zur gezielten Verstärkung oder Dämpfung des während des Selbsttests der Überwachungseinheit als Testsignal zugeführten analogen Messsignals vorgesehen.

Die EP 2 631 681 A1 betrifft einen Lichtvorhang. Dieser dient zur Erfassung von Objekten innerhalb eines Überwachungsbereichs und umfasst eine Anordnung von Lichtstrahlen emittierenden Sendern, eine Anordnung von Lichtstrahlen empfangenden Empfängern und eine Auswerteeinheit, in welcher in Abhängigkeit von Empfangssignalen an den Ausgängen von Empfängern ein Objektfeststellungssignal generiert wird. Die Sender und die Empfänger sind über Ausgangsleitungen einer Anordnung von Rechnereinheiten angesteuert, wobei über diese die Zeitpunkte der Aktivierung einzelner Sender und Empfänger frei wählbar sind.

Die DE 10 2009 040 384 A1 betrifft einen Sensor zur Messung mindestens einer Messgröße sowie ein Sensornetzwerk zur Zustands- und Prozessüberwachung. Der Sensor Umfasst einen Messgrößenaufnehmer zur Wandlung der Messgrö-ßen in Messdaten. Im Weiteren besitzt der Sensor eine Schnittstelle zur Übertragung der Messdaten des Messgrößenaufnehmers sowie zum Empfang und zum Senden weiterer Messdaten und Prozessparameter. Bei den weiteren Messdaten kann es sich insbesondere um Messdaten handeln, die von einem weiteren Sensor gesendet wurden. Bei den Prozessparametern handelt es sich um Daten, die zur Steuerung des Sensors, beispielsweise zur Konfiguration des Messgrößenaufnehmers erforderlich sind. Der erfindungsgemäße Sensor umfasst weiterhin einen Prozessor zur Verarbeitung der Messdaten des Messgrößenaufnehmers, der weiteren Messdaten und der Prozessparameter.

Die in EP 2 631 682 A2 beschriebene Sensoranordnung umfasst eine Anordnung von Lichtvorhängen sowie einen Trigger-Generator, welcher zyklisch Trigger-Signale generiert. Jedes Trigger-Signal wird den Lichtvorhängen zugeführt, wobei in jedem Lichtvorhang durch ein empfangenes Trigger-Signal nach einer vorgegebenen Verzögerungszeit ein Messvorgang gestartet wird.

Der Erfindung liegt die Aufgabe zugrunde, eine Überwachungsanordnung mit hoher Funktionalität bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungsanordnung für eine Anlage mit einer die Anlage steuernden Steuerung und mit einem eine Auswerteeinheit und Sensorkomponente aufweisenden optischen Sensor. Die Steuerung und der optische Sensor sind über eine serielle Übertragungsstrecke verbunden. Der optische Sensor ist mittels der Steuerung konfiguriert. In Abhängigkeit der Konfiguration in der Auswerteeinheit des optischen Sensors werden Vorverarbeitungen von Einzelsensorinformationen der Sensorkomponenten durchgeführt. Daraus werden Teilergebnisse generiert, welche an die Steuerung für eine Weiterverarbeitung übertragen werden.

Mit den erfindungsgemäßen Überwachungsanordnungen bzw. mit einem Verfahren zum Betrieb einer solchen Überwachungsanordnung wird eine flexible Überwachungsfunktion für eine Anlage bereitgestellt, wobei die Anlage auch als Maschine, Roboter und dergleichen ausgebildet sein kann.

Die Überwachungsanordnung weist generell eine Steuerung auf, an welche im einfachsten Fall ein optischer Sensor über eine serielle Übertragungsstrecke angeschlossen ist. Generell können auch mehrere optische Sensoren an die Steuerung angeschlossen sein.

Die Überwachungsanordnung kann insbesondere im Bereich der Sicherheitstechnik eingesetzt werden, insbesondere im Bereich des Personenschutzes.

In diesem Fall sind vorteilhaft die Steuerung als sichere Steuerung und der optische Sensor als sicherer optischer Sensor ausgebildet.

Eine sichere Steuerung weist generell einen fehlersicheren Aufbau, insbesondere in Form zweier sich gegenseitig zyklisch überwachender Rechnereinheiten auf. Ein sicherer Sensor weist einen entsprechenden fehlsicheren Aufbau mit einer redundant aufgebauten, zweikanaligen Auswerteeinheit auf.

Um die Sicherheitsanforderungen im Bereich der Sicherheitstechnik zu erfüllen, erfolgt zudem auch über die serielle Übertragungsstrecke eine sichere Datenübertragung.

Hierzu sind vorteilhaft über die serielle Übertragungsstrecke übertragene Informationen durch Prüfsummen abgesichert.

Durch diese Absicherung mit Prüfsummen können einerseits Übertragungsfehler bei der Übertragung von Information über die serielle Übertragungsstrecke aufgedeckt werden. Weiterhin können auch Fehler in der Abspeicherung von Informationen im optischen Sensor bzw. in der Steuerung aufgedeckt werden.

Die serielle Übertragungsstrecke ist vorteilhaft von einem Bussystem, insbesondere einem Feldbus gebildet, wobei die Steuerung und der optische Sensor hier geeignete Schnittstellen aufweisen. Ein Beispiel für ein derartiges Bussystem ist IO-Link Safety.

Bei einem Einsatz im Bereich der Sicherheitstechnik wird generell mit dem optischen Sensor ein Gefahrenbereich an der Anlage überwacht. Aus den im optischen Sensor generierten Teilergebnissen bei der Objekterkennung wird dann in der Steuerung ein Steuersignal für die Anlage generiert. Das Steuersignal ist dann als Abschaltbefehl für die Anlage ausgebildet, wenn mit dem optischen Sensor ein gefahrbringender Eingriff in den Gefahrenbereich registriert wird. Durch dieses Abschalten der Anlage werden gefahrbringende Zustände, insbesondere für Personen, vermieden.

Bei der erfindungsgemäßen Überwachungsanordnung kann der optische Sensor ein Lichttaster oder Distanzsensor sein.

In beiden Fällen weist der optische Sensor als Sensorkomponente einen Lichtstrahlen emittierenden Sender und einen Lichtstrahlen empfangenden Empfänger auf. Der Sender emittiert dabei die Lichtstrahlen in eine vorgegebene Richtung, so dass mit derartigen optischen Sensoren nur ein eng begrenzter Raumbereich überwacht werden kann.

Um eine Überwachung innerhalb eines ausgedehnten, insbesondere flächigen Überwachungsbereichs zu ermöglichen, können diese optischen Sensoren derart weitergebildet sein, dass diese eine Mehrfachanordnung von Sendern und Empfängern aufweisen und damit die Struktur eines tastenden Lichtvorhangs aufweisen.

Alternativ kann der optische Sensor ein scannendes System sein.

In diesem Fall überstreichen die Lichtstrahlen des Senders periodisch innerhalb vorgegebener Abtastzyklen einen flächigen Überwachungsbereich. Die Ablenkbewegung der Lichtstrahlen kann dadurch erzeugt werden, dass einem stationär angeordneten Sender eine sich drehende oder allgemein sich bewegende Ablenkeinheit nachgeordnet ist, mittels derer die Lichtstrahlen periodisch abgelenkt werden. Alternativ können der Sender und der Empfänger des optischen Sensors in einem rotierenden Messkopf integriert sein.

Weiterhin kann der optische Sensor als Lichtvorhang ausgebildet sein.

Der Lichtvorhang weist eine Sendereinheit mit einer Anzahl von Lichtstrahlen emittierenden Sendern und eine Empfängereinheit mit einer Anzahl von Lichtstrahlen empfangenden Empfängern auf. Der Lichtvorhang kann nach dem Lichtschrankenprinzip arbeiten. In diesem Fall sind die Sendereinheit und die Empfängereinheit an gegenüberliegenden Rändern eines Überwachungsbereichs so angeordnet, dass bei keinem Überwachungsbereich die Lichtstrahlen der Sender jeweils ungehindert auf einen zugeordneten Empfänger auftreffen. Alternativ kann der Lichtvorhang nach dem Reflexionslichtschrankenprinzip arbeiten. In diesem Fall befinden sich die Sendereinheit und Empfängereinheit am selben Rand des Überwachungsbereichs, wobei am gegenüberliegenden Rand des Überwachungsbereichs ein Reflektor angeordnet ist. Bei freiem Überwachungsbereich werden dann von einem Sender emittierte Lichtstrahlen ungehindert zum Reflektor geführt und von dort ungehindert zu dem jeweils zugeordneten Empfänger reflektiert.

Bei beiden Varianten erfolgt eine Objekterkennung dadurch, dass ein im Überwachungsbereich befindliches Objekt die Lichtstrahlen wenigstens eines Senders wenigstens teilweise unterbricht. Diese Unterbrechungen werden dadurch erfasst, dass die Amplituden der Empfangssignale der einzelnen Empfänger jeweils mit einem Schwellwert bewertet werden. Vorteilhaft werden zur Objektdetektion die einzelnen Strahlenachsen bildenden Sender-Empfängerpaare periodisch einzeln nacheinander innerhalb vorgegebener Abstandszyklen aktiviert.

Der Grundgedanke der Erfindung besteht darin, dass die Steuerung für den optischen Sensor eine Konfiguration vorgibt, wobei der optische Sensor entsprechend dieser Konfiguration Vorverarbeitungen derart durchführt, dass aus Einzelsensorinformationen von Sensorkomponenten Teilergebnisse gewonnen und an die Steuerung übertragen werden, wo diese weiterverarbeitet werden.

Die Weiterverarbeitung der Teilergebnisse kann in der Steuerung dadurch erfolgen, dass aus diesen Teilergebnissen ein Gesamtergebnis generiert wird. Vorteilhaft kann als Gesamtergebnis ein Steuersignal für die Anlage generiert werden. Insbesondere dann, wenn die Auswertung der Teilergebnisse des optischen Sensors ergibt, dass ein gefahrbringender Zustand vorliegt, wird als Steuerbefehl ein Abschaltbefehl für die Anlage generiert.

Vorteilhaft erfolgt in der Steuerung eine logische Verarbeitung der Teilergebnisse des optischen Sensors. Im einfachsten Fall erfolgt eine logische Verknüpfung von mehreren zeitgleich vorliegenden Teilergebnissen. Weiterhin können die Vorverarbeitungen auch zu unterschiedlichen Zeiten erfolgen, so dass die Teilergebnisse zeitversetzt in der Steuerung vorliegen. In diesem Fall kann die logische Verarbeitung derart erweitert sein, dass kausale Abhängigkeiten der Teilergebnisse gebildet werden.

Ein erster wesentlicher Vorteil der Erfindung besteht somit darin, dass die Steuerung die Endverarbeitung von Teilergebnissen des optischen Sensors übernimmt, um dadurch ein Gesamtergebnis zu generieren, das insbesondere ein Steuersignal für die zu steuernde Anlage sein kann. Die Steuerung kann somit eine flexible Anpassung an Anforderungen der Anlage, insbesondere an Anforderungen für eine Überwachung der Anlage vornehmen, indem sie für den optischen Sensor eine hierzu passende Konfiguration vorgibt, so dass der optische Sensor passende Teilergebnisse generiert, die dann die Steuerung zu einem für die Anforderungen passenden Gesamtergebnis verarbeitet.

Ein weiterer wesentlicher Vorteil der Erfindung besteht darin, dass mit den im optischen Sensor durchgeführten Vorverarbeitungen eine Datenverdichtung erfolgt, da eine Vielzahl von Einzelsensorinformationen zu jeweils einem Teilergebnis zusammengefasst wird. Diese Teilergebnisse, die nur ein geringes Datenvolumen beanspruchen, können über die serielle Übertragungsstrecke schnell, d. h. ohne nennenswerte Verzögerung, an die Steuerung übertragen werden. Die Steuerung der Gesamtergebnisse aus den Teilergebnissen des optischen Sensors kann somit mit kurzen Reaktionszeiten erfolgen.

Gemäß einer vorteilhaften Ausführungsform ist der optische Sensor dadurch konfiguriert, dass von der Steuerung Auswerteregeln für die Durchführung der Vorverarbeitung an diesen übertragen werden.

Mit den Auswerteregeln kann die Funktionsweise, insbesondere die Art der Signalauswertung, vorgegeben werden. Dabei können einerseits die Funktionalitäten der einzelnen Sensorkomponenten vorgegeben werden. Weiterhin kann vorgegeben werden, welche Sensorkomponenten miteinander kombiniert werden, um für ein bei einer Vorverarbeitung zu generierendes Teilergebnis beizutragen. Mittels dieser Auswerteregel kann die Steuerung eine flexible und schnelle Anpassung der Funktion des optischen Sensors vornehmen und so gezielt auf sich ändernde Anforderungen reagieren.

Insbesondere können damit unterschiedliche Konfigurationen zeitabhängig von der Steuerung vorgeben werden. Dadurch ist es möglich, dass im optischen Sensor unterschiedliche Vorverarbeitungen zeitlich parallel, hintereinander oder überlappend durchgeführt werden.

Die zeitliche Abfolge der im optischen Sensor durchführenden Vorverarbeitung kann damit von der Steuerung an die jeweiligen Anforderungen angepasst werden.

Gemäß einer vorteilhaften Ausführungsform ist im optischen Sensor für einzelne Vorverarbeitungen jeweils eine Gruppe von Sensorkomponenten zusammengefasst.

Diese Ausführungsform eignet sich insbesondere für optische Sensoren in Form von Lichtvorhängen. Dort können durch Vorgabe von Auswerteregeln einzelne Gruppen von zusammengehörenden Sendern und Empfängern zusammengefasst werden, wobei mit diesen Gruppen unterschiedliche zusammenhängende oder auch nicht zusammenhängende Bereiche überwacht werden.

Durch eine solche Unterteilung der Sensorkomponenten in Gruppen kann beispielsweise die Signalauswertung derart optimiert werden, dass nicht ständig alle Sensorkomponenten zur Signalauswertung herangezogen werden, sondern jeweils nur die für eine Überwachungsfunktion relevanten Sensorkomponenten.

Beispielsweise können bei einem Lichtvorhang, der zu einer Objektverfolgung von Objekten im Überwachungsbereich eingesetzt wird, bei in der Steuerung vorhandenen Bahnen von Objekten durch zeitabhängige Vorgabe geeigneter Auswerteregeln für Gruppen von Sender-Empfängerpaare immer nur die Bereiche des Lichtvorhangs aktiviert werden, wo sich das Objekt gerade aufhält, um dieses dann beispielsweise in seiner Geometrie zu erfassen.

Gemäß einer weiteren vorteilhaften Ausführungsform wird der optische Sensor zur Überwachung eines Überwachungsbereichs ausgebildet. Mit einer Vorverarbeitung wird ein Teilbereich des Überwachungsbereichs erfasst.

Bei einem Lichtvorhang ist eine Unterteilung des Überwachungsbereichs in Teilbereiche dadurch möglich, dass unterschiedliche Gruppen von Sender-Empfängerpaaren zusammengefasst werden und für diese separate Vorverarbeitungen zur Generierung von Teilergebnissen durchgeführt werden.

Bei einem optischen Sensor in Form eines scannenden Systems werden die Lichtstrahlen des Senders innerhalb eines Winkelbereichs geführt, um den Überwachungsbereich abzutasten. Teilbereiche des Überwachungsbereichs werden dann durch Teilbereiche dieses Winkelbereichs vorgegeben, so dass in diesem separate Vorverarbeitungen zur Generierung von Teilergebnissen durchgeführt werden können.

Gemäß einer vorteilhaften Ausführungsform ist durch Auswerteregeln einer Vorverarbeitung der Modus einer Objekterfassung vorgegeben.

Insbesondere kann durch Auswerteeinheiten die Art der Signalauswertung für eine Objekterfassung vorgegeben werden.

Beispielsweise kann eine räumliche Filterfunktion in Form einer reduzierten Auflösung des optischen Sensors vorgegeben werden. Bei einem scannenden Distanzsensor kann beispielsweise eine Mindestgröße für ein zu detektierendes Objekt vorgegeben werden. Bei einem Lichtvorhang kann eine reduzierte Auflösung dadurch erhalten werden, dass für eine Objektdetektion nicht nur die Unterbereiche einer Strahlachse, sondern die Unterbrechung mehrerer aufeinanderfolgender Strahlachsen gefordert wird.

Weiterhin kann eine zeitliche Filterfunktion derart vorgegeben werden, dass der optische Sensor das jeweilige Objekt nicht nur während eines Abtastzyklus, sondern während mehreren aufeinanderfolgenden Abtastzyklen erkennt.

Weiterhin kann auch eine Kontur- oder Größenerkennung von Objekten vorgenommen werden. Bei einem Lichtvorhang erfolgt dies dadurch, dass zur Erkennung einer Kontur eine vorgegebene Anzahl unterbrochener Strahlachsen gefordert sind, wobei zur Bestimmung der Lage und Größe Randstrahlen bildende Strahlachsen erfasst werden, die den Übergang zwischen unterbrochenen und nicht unterbrochenen Strahlachsen bilden.

Bei einer Zusammenfassung von Sensorkomponenten des optischen Sensors zu einzelnen Gruppen, bzw. einer Einteilung des Überwachungsbereichs in verschiedene Teilbereiche, können für die unterschiedlichen Gruppen bzw. Teilbereiche unterschiedliche Vorverarbeitungen durchgeführt werden, insbesondere durch Vorgabe unterschiedlicher Filterfunktionen.

Besonders vorteilhaft wird durch Auswerteregeln einer Vorverarbeitung eine Amplitudenbewertung vorgegeben.

Mit den durchgeführten Amplitudenbewertungen werden Statusinformationen über den optischen Sensor gewonnen, die in die Steuerung zurückgelesen werden. Anhand dieser Statusinformationen kann beispielsweise die Steuerung kontrollieren, ob der optische Sensor fehlerfrei arbeitet. Dieser Status des optischen Sensors kann in der Steuerung mit geeigneten Anzeigemitteln angezeigt werden. Weiterhin kann die Steuerung in Abhängigkeit der Ergebnisse der Amplitudenbewertungen Einstellungen des optischen Sensors vornehmen, indem sie über die serielle Überwachungsstrecke entsprechende Einstellbefehle an den optischen Sensor sendet.

Besonders vorteilhaft wird die Amplitudenbewertung bei optischen Sensoren in Form von Lichtvorhängen durchgeführt. Je nachdem, ob gemäß einer Auswerteregel eine Vorverarbeitung für einen genannten Lichtvorhang oder nur für eine Gruppe von Strahlachsen durchgeführt wird, werden vorzugsweise über mehrere Abtastzyklen die Amplituden der Empfangssignale erfasst. Aus diesen Amplituden werden als Amplitudenbewertungssignale der arithmetische Mittelwert und/oder der geometrische Mittelwert und/oder die Maximalamplitude und/oder die Minimalamplitude bestimmt und als Teilergebnis vom optischen Sensor an die Steuerung übertragen.

Abhängig von diesem Amplitudenbewertungssignal können dann beispielsweise durch die Steuerung die Schwellwerte des Lichtvorhangs, mit denen die Empfangssignale bewertet werden, vorgegeben werden.

Die Erfindung wird im Folgenden anhand der Zeichnungen erläutert. Es zeigen:
- Figur 1:: Schematische Darstellung eines Ausführungsbeispiels der erfindungsgemäßen Überwachungsanordnung.
- Figur 2:: Darstellung eines optischen Sensors in Form eines Lichtvorhangs für die Überwachungsanordnung gemäß Figur 1.
- Figur 3:: Darstellung eines optischen Sensors in Form eines Flächendistanzsensors für die Überwachungsanordnung.

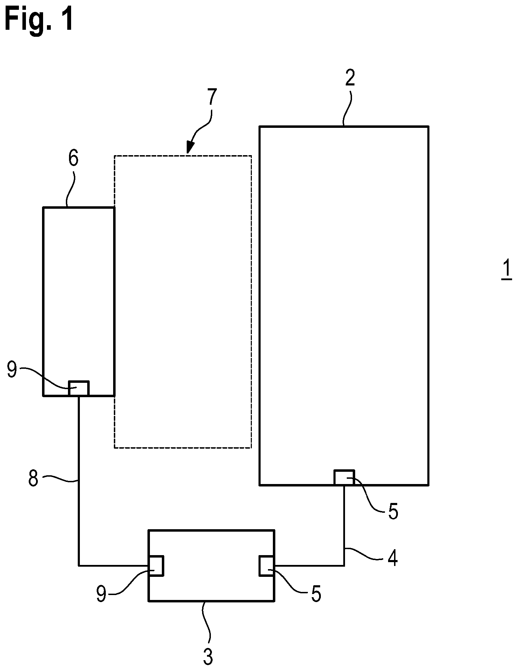

Figur 1 zeigt schematisch ein Ausführungsbeispiel der erfindungsgemäßen Überwachungsanordnung 1. Mit der Überwachungsanordnung 1 erfolgt eine Überwachung einer Anlage 2, die von einer Steuerung 3 gesteuert wird. Hierzu ist die Anlage 2 über eine Leitung 4 mit der Steuerung 3 verbunden. Zum Anschluss der Leitung 4 weisen sowohl die Anlage 2 und die Steuerung 3 eine Schnittstelle 5 auf.

Die Überwachungsanordnung 1 weist weiterhin einen optischen Sensor 6 auf, mit dem Objekte innerhalb eines Überwachungsbereichs 7 erfasst werden. Der Überwachungsbereich 7 ist so dimensioniert, dass dieser einen Gefahrenbereich an der Anlage 2 abdeckt.

Die Steuerung 3 und der optische Sensor 6 sind über eine serielle Übertragungsstrecke 8, die von einem Bussystem gebildet ist, verbunden. Hierzu weisen die Steuerung 3 und der optischen Sensor 6 jeweils eine serielle Schnittstelle 9 auf.

Die Überwachungsanordnung 1 wird im vorliegenden Fall im Bereich der Sicherheitstechnik eingesetzt. Hierzu ist die Steuerung 3 als sichere Steuerung 3 ausgebildet, d. h. die Steuerung 3 weist einen fehlersicheren Aufbau auf, beispielsweise mit zwei sich gegenseitig zyklisch überwachenden Rechnereinheiten. Ebenso ist der optische Sensor 6 als sicherer optischer Sensor 6 aufgebaut, was beispielsweise dadurch erreicht wird, dass eine Auswerteeinheit zur Signalanordnung, welche ebenfalls zwei sich gegenseitig zyklisch überwachenden Rechnereinheiten aufweist, vorgesehen ist.

Schließlich erfolgt auch eine sichere Datenübertragung über die serielle Übertragungsstrecke 8. Dies wird dadurch erreicht, dass über die serielle Übertragungsstrecke 8 übertragene Daten durch Prüfsummen abgesichert sind.

Erfindungsgemäß gibt die Steuerung 3 für den optischen Sensor 6 Konfigurationen vor, indem die Steuerung 3 an den optischen Sensor 6 Auswerteregeln sendet. Entsprechend der Auswerteregeln erfolgt im optischen Sensor 6 oder in Teilen des optischen Sensors 6 eine Vorverarbeitung, wobei bei jeder Vorverarbeitung Teilergebnisse generiert werden, die an die Steuerung 3 gesendet werden.

Die einzelnen Vorverarbeitungen, die im optischen Sensor 6 durchgeführt werden, können zeitlich versetzt, parallel oder verschachtelt ablaufen.

In jedem Fall erfolgen die Vorverarbeitungen derart, dass mit den aus Einzelsensorinformationen von Sensorkomponenten des optischen Sensors 6 gewonnenen Teilergebnisse eine Datenverdichtung erzielt wird, d. h. die Teilergebnisse weisen im Vergleich zu den Einzelsensorinformationen ein geringeres Datenvolumen auf, so dass die Teilergebnisse ohne nennenswerte Verzögerungen an die Steuerung 3 übertragen werden können.

Durch die Vorgabe der Auswerteregeln kann die Steuerung 3 flexibel die Funktionalität des optischen Sensors 6, insbesondere dessen Signalauswertung, an sich verändernde Anforderungen anpassen.

In der Steuerung 3 erfolgt eine Weiterverarbeitung der Teilergebnisse, insbesondere zur Generierung eines Gesamtergebnisses. Da die Teilergebnisse nur eine geringe Datenmenge darstellen, kann die Weiterverarbeitung sehr schnell erfolgen. Vorteilhaft erfolgt in der Steuerung 3 eine logische Verarbeitung der Teilergebnisse.

Insbesondere wird in der Steuerung 3 in Abhängigkeit der Teilergebnisse ein Steuersignal für die Anlage 2 generiert. Wird mit dem optischen Sensor 6 ein gefahrbringender Eingriff in den Überwachungsbereich 7 festgestellt, wird als Steuersignal ein Abschaltbefehl für die Anlage 2 erzeugt, so dass von der Anlage 2 keine Gefahren mehr ausgehen können.

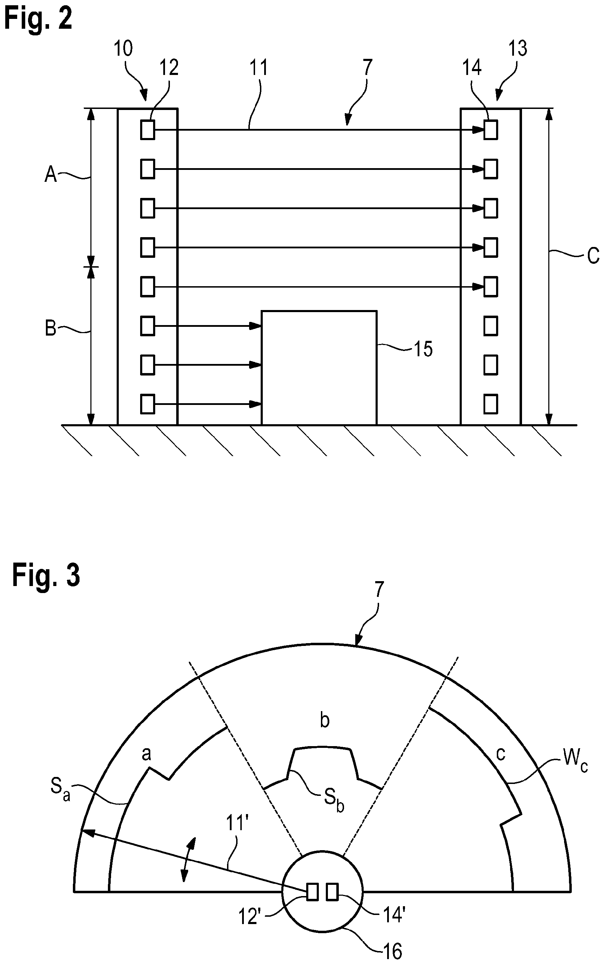

Figur 2 zeigt ein Ausführungsbeispiel eines optischen Sensors 6 in Form eines Lichtvorhangs. Der Lichtvorhang umfasst eine Sendereinheit 10 mit einer Anzahl von Lichtsignalen 11 emittierenden Sendern 12 an einem Rand des Überwachungsbereichs 7 und eine Empfängereinheit 13 mit einer der Anzahl von Sendern 12 entsprechenden Anzahl von Empfängern 14. Die Sender 12 werden von einer nicht dargestellten Sendersteuerung gesteuert. Die Auswertung der Empfangssignale des Empfängers 14 erfolgt in der Empfängereinheit 13.

Die Sender 12 und Empfänger 14 sind paarweise gegenüberliegend zugeordnet, so dass bei freiem Überwachungsbereich 7 die Lichtstrahlen 11 des Senders 12 ungehindert zum zugeordneten Empfänger 14 geführt sind. Jedes Sender-Empfängerpaar bildet eine Strahlachse. Durch eine optische Synchronisierung werden die die Strahlachsen bildenden Sender-Empfängerpaare innerhalb vorgegebener Ablaufzyklen paarzyklisch einzeln nacheinander aktiviert.

Im vorliegenden Fall weist der Lichtvorhang acht Strahlachsen auf. Natürlich kann der Lichtvorhang auch eine andere Anzahl von Strahlachsen aufweisen.

Der Lichtvorhang arbeitet nach dem Lichtschrankenprinzip. Demzufolge erfolgt eine Objekterkennung durch eine Unterbrechung der Lichtsignale wenigstens einer Strahlachse. Diese Strahlenunterberechnungen werden dadurch erfasst, dass die Empfangssignale der Empfänger 14 jeweils mit einem Schwellwert bewertet werden. Bei der Anordnung gemäß Figur 1 sind die Lichtstrahlen 11 der drei unteren Strahlachsen durch ein Objekt in Form einer Kiste 15 unterbrochen.

Durch Vorgabe von Auswerteregeln kann die Steuerung 3 drei Gruppen A, B, C von Strahlachsen des Lichtvorhangs definieren, wobei in den einzelnen Gruppen unterschiedliche Vorverarbeitungen zur Generierung von Teilergebnissen durchgeführt werden. Die Gruppe A umfasst die oberen vier Strahlachsen des Lichtvorhangs. Die Gruppe B umfasst die unteren vier Strahlachsen des Lichtvorhangs. Die Gruppe C umfasst alle Strahlachsen des Lichtvorhangs.

Für die Gruppe B werden von der Steuerung 3 Auswerteregeln derart vorgegeben, dass ein Objekt als erkannt gilt, wenn nur innerhalb eines Zyklus wenigstens eine Strahlachse unterbrochen ist. Damit wird in diesem Teilbereich des Lichtvorhangs eine schnelle Objektdetektion von insbesondere kleinen Objekten wie einem Finger einer Person gemeldet. Wird ein solcher Objekteingriff im Lichtvorhang registriert, wird dies von der Gruppe B als Teilergebnis an die Steuerung 3 ausgegeben.

Für die Gruppe A werden von der Steuerung 3 Auswerteregeln derart vorgegeben, dass ein Objekt als erkannt gilt, wenn innerhalb mehrerer Abtastzyklen, insbesondere bei Abtastzyklen hintereinander, ein Objekt wenigstens 2 aufeinanderfolgende Strahlen unterbricht. Auch derartige Objekteerfassungen werden als Teilergebnis in die Steuerung 3 ausgegeben.

Für die Gruppe C werden Auswerteregeln derart vorgegeben, dass der Überwachungsbereich 7 dann als frei gilt, wenn z. B. in einem aufeinanderfolgenden Ablaufzyklus keine Unterbrechung einer Strahlachse registriert wird.

Weiterhin können die Kanten der Kiste 15 erkannt werden, indem eine vorgegebene Anzahl unterbrochener Strahlachsen erkannt wird, wobei die Randstrahlen, d. h. die erste und letzte unterbrochenen Strahlachse einen bestimmten Abstand aufweisen.

Auch diese Informationen können als Teilergebnis an die Steuerung 3 ausgegeben werden.

In der Steuerung 3 werden die Teilergebnisse logisch verknüpft.

Als Ergebnis dieser Verknüpfung wird z. B. in der Steuerung 3 ein Abschaltbefehl für die Anlage 2 dann generiert, wenn entweder für die Gruppe A ein Objekteingriff registriert wird, oder für die Gruppe B ein Objekteingriff registriert wird, dieser aber gemäß der Auswertung der Gruppe C nicht vom Einfahren der nicht sicherheitskritischen Kiste 15 in den Überwachungsbereich 7 erfasst wird.

Schließlich kann für die Gruppe C durch Vorgabe von Auswerteregeln eine Amplitudenbewertung der Empfangssignale der aller Empfänger 14 vorgegeben werden, dass für diese als Amplitudenbewertungssignal der Mittelwert, der Maximalwert und/oder der Minimalwert bestimmt wird. Diese Amplitudenbewertungssignale werden als Teilergebnisse an die Steuerung 3 ausgegeben. In Abhängigkeit hiervon kann die Steuerung 3 die Schwellwerte zur Bearbeitung der Empfangssignale der Empfänger 14 des Lichtvorhangs einstellen.

Figur 3 zeigt einen optischen Sensor 6 in Form eines Flächendistanzsensors. Der Flächendistanzsensor weist einen um eine Drehachse drehenden Messkopf 16 auf. In diesem Messkopf 16 ist ein Distanzsensor bestehend aus einem Sender 12' und einem Empfänger 14' integriert. Die Distanzmessungen erfolgen nach einem Puls-Laufzeit-Verfahren. Durch die Drehbewegung des Messkopfs 16 überstreichen die vom Sender 12 emittierten Lichtstrahlen 11' periodisch einen sich über einen Winkelbereich von 180° erstreckenden Überwachungsbereich 7.

Der Überwachungsbereich 7 ist in drei Teilbereiche a, b, c unterteilt, für welche von der Steuerung 3 unterschiedliche Auswerteregeln vorgegeben werden, so dass für diese Teilbereiche unterschiedliche Vorverarbeitungen durchgeführt werden.

So wird für den Teilbereich eine Schutzfeldgrenze Sₐ vorgegeben, die ein erstes Schutzfeld begrenzt. Wird innerhalb dieses Schutzfelds ein Objekteingriff registriert, wird dies als Teilergebnis an die Steuerung 3 ausgegeben, worauf diese einen Abschaltbefehl für die Anlage 2 erzeugt.

Entsprechend wird für den Teilbereich a eine Schutzfeldgrenze S_{b} vorgegeben, die ein zweites Schutzfeld begrenzt. Wird innerhalb dieses Schutzfeldes ein Objekteingriff registriert, wird dies als Teilergebnis an die Steuerung 3 ausgegeben, worauf diese einen Abschaltbefehl für die Anlage 2 erzeugt.

Für den Teilbereich c wird eine Warnfeldgrenze W_{c} vorgegeben, die ein Warnfeld begrenzt. Wird innerhalb dieses Warnfelds ein Objekteingriff registriert, wird dies als Teilergebnis an die Steuerung 3 ausgegeben, worauf diese ein Warnsignal generiert.

Die Schutzfelder in den Teilbereichen a, b und auch das Warnfeld können allgemein über die Steuerung 3 zu unterschiedlichen Zeiten aktiviert sein.

### Bezugszeichenliste

- (1): Überwachungsanordnung
- (2): Anlage
- (3): Steuerung
- (4): Leitung
- (5): Schnittstelle
- (6): Optischer Sensor
- (7): Überwachungsbereich
- (8): Serielle Übertragungsstrecke
- (9): Serielle Schnittstelle
- (10): Sendereinheit
- (11): Lichtstrahlen
- (11'): Lichtstrahlen
- (12): Sender
- (12'): Sender
- (13): Empfängereinheit
- (14): Empfänger
- (14'): Empfänger
- (15): Kiste
- (16): Messkopf

## Patentansprüche

1. Überwachungsanordnung (1) für eine Anlage (2) mit einer die Anlage (2) steuernden Steuerung (3) und mit einem eine Auswerteeinheit und eine Sensorkomponente aufweisenden optischen Sensor (6), wobei die Steuerung (3) und der optische Sensor (6) über eine serielle Übertragungsstrecke (8) verbunden sind, **dadurch gekennzeichnet, dass** der optische Sensor (6) mittels der Steuerung (3) konfigurierbar ist, und dass der optische Sensor dazu eingerichtet ist, dass in Abhängigkeit der Konfiguration in der Auswerteeinheit des optischen Sensors (6) Vorverarbeitungen von Einzelsensorinformationen der Sensorkomponente durchgeführt werden und daraus Teilergebnisse generiert werden, und dass diese Teilergebnisse an die Steuerung (3) für eine Weiterverarbeitung übertragen werden.

2. Überwachungsanordnung (1) nach Anspruch 1, **dadurch gekennzeichnet, dass** der optische Sensor (6) dadurch konfigurierbar ist, dass von der Steuerung (3) Auswerteregeln für die Durchführung der Vorverarbeitung an diesen übertragen werden.

3. Überwachungsanordnung (1) nach einem der Ansprüche 1 oder 2, **dadurch gekennzeichnet, dass** der optische Sensor (6) dazu eingerichtet ist, unterschiedliche Vorverarbeitungen zeitlich parallel, hintereinander oder überlappend durchzuführen.

4. Überwachungsanordnung (1) nach einem der Ansprüche 1 bis 3, **dadurch gekennzeichnet, dass** im optischen Sensor (6) für einzelne Vorverarbeitungen jeweils eine Gruppe von Sensorkomponenten zusammengefasst ist.

5. Überwachungsanordnung (1) nach einem der Ansprüche 1 bis 4, **dadurch gekennzeichnet, dass** der optische Sensor (6) zur Überwachung eines Überwachungsbereichs (7) ausgebildet ist, und dass mit einer Vorverarbeitung ein Teilbereich des Überwachungsbereichs (7) erfasst wird.

6. Überwachungsanordnung (1) nach einem der Ansprüche 2 bis 5, **dadurch gekennzeichnet, dass** durch Auswerteregeln einer Vorverarbeitung der Modus einer Objekterfassung vorgegeben ist.

7. Überwachungsanordnung (1) nach einem der Ansprüche 2 bis 6, **dadurch gekennzeichnet, dass** durch Auswerteregeln einer Vorverarbeitung eine Amplitudenbewertung vorgebbar ist.

8. Überwachungsanordnung (1) nach einem der Ansprüche 1 bis 7, **dadurch gekennzeichnet, dass** die Steuerung (3) für eine logische Verarbeitung von Teilergebnissen des optischen Sensors (6) ausgebildet ist.

9. Überwachungsanordnung (1) nach einem der Ansprüche 1 bis 7, **dadurch gekennzeichnet, dass** die Steuerung (3) dazu eingerichtet ist, aus den Teilergebnissen des optischen Sensors (6) ein oder mehrere Steuersignale für die Anlage (2) zu generieren.

10. Überwachungsanordnung (1) nach einem der Ansprüche 1 bis 9, **dadurch gekennzeichnet, dass** die serielle Übertragungsstrecke (8) von einem Bussystem gebildet ist.

11. Überwachungsanordnung (1) nach einem der Ansprüche 1 bis 10, **dadurch gekennzeichnet, dass** über die serielle Übertragungsstrecke (8) übertragene Informationen durch Prüfsummen abgesichert sind.

12. Überwachungsanordnung (1) nach einem der Ansprüche 1 bis 10, **dadurch gekennzeichnet, dass** die Steuerung (3) als sichere Steuerung (3) und der optische Sensor (6) als sicherer optischer Sensor (6) ausgebildet sind.

13. Überwachungsanordnung (1) nach einem der Ansprüche 1 bis 12, **dadurch gekennzeichnet, dass** der optische Sensor (6) ein Lichttaster oder Distanzsensor ist.

14. Überwachungsanordnung (1) nach Anspruch 13, **dadurch gekennzeichnet, dass** der optische Sensor (6) ein scannendes System ist.

15. Überwachungsanordnung (1) nach einem der Ansprüche 1 bis 12, **dadurch gekennzeichnet, dass** der optische Sensor (6) ein Lichtvorhang ist.

16. Verfahren zum Betrieb einer Überwachungsanordnung (1) für eine Anlage (2), wobei die Überwachungsanordnung (1) eine die Anlage (2) steuernde Steuerung (3) und einen eine Auswerteeinheit und eine Sensorkomponente aufweisenden optischen Sensor (6) aufweist, wobei die Steuerung (3) und der optische Sensor (6) über eine serielle Übertragungsstrecke (8) verbunden sind, **dadurch gekennzeichnet, dass** der optische Sensor (6) mittels der Steuerung (3) konfiguriert wird, dass in Abhängigkeit der Konfiguration in der Auswerteeinheit des optischen Sensors (6) Vorverarbeitungen von Einzelsensorinformationen der Sensorkomponente durchgeführt werden und daraus Teileergebnisse generiert werden, und dass diese Teilergebnisse an die Steuerung (3) für eine Weiterverarbeitung übertragen werden.

## Claims

1. A monitoring arrangement (1) for a plant (2) with a controller (3) controlling the plant (2) and with an optical sensor (6) having an evaluation unit and a sensor component, the controller (3) and the optical sensor (6) being connected via a serial transmission path (8), **characterized in that** the optical sensor (6) can be configured by means of the controller (3), and **in that** the optical sensor is set up for this purpose,
**in that**, depending on the configuration in the evaluation unit of the optical sensor (6), preprocessing of individual sensor information of the sensor component is carried out and partial results are generated therefrom, and **in that** these partial results are transmitted to the controller (3) for further processing.

2. The monitoring arrangement (1) according to claim 1, **characterised in that** the optical sensor (6) is configurable **in that** evaluation rules for carrying out the preprocessing are transmitted to it by the control system (3).

3. The monitoring arrangement (1) according to one of claims 1 or 2, **characterised in that** the optical sensor (6) is set up to carry out different preprocessings.

4. The monitoring arrangement (1) according to one of claims 1 to 3, **characterised in that** a group of sensor components is combined in the optical sensor (6) for individual preprocessings in each case.

5. The monitoring arrangement (1) according to one of claims 1 to 4, **characterised in that** the optical sensor (6) is designed to monitor a monitoring area (7), and **in that** a partial area of the monitoring area (7) is detected with preprocessing.

6. The monitoring arrangement (1) according to one of claims 2 to 5, **characterised in that** the mode of an object detection is predetermined by evaluation rules of a preprocessing.

7. The monitoring arrangement (1) according to one of claims 2 to 6, **characterised in that** an amplitude evaluation can be preset by evaluation rules of a preprocessing.

8. The monitoring arrangement (1) according to one of claims 1 to 7, **characterised in that** the controller (3) is designed for logical processing of partial results of the optical sensor (6).

9. The monitoring arrangement (1) according to one of claims 1 to 7, **characterised in that** the controller (3) is set up to generate one or more control signals for the installation (2) from the partial results of the optical sensor (6).

10. The monitoring arrangement (1) according to one of claims 1 to 9, **characterised in that** the serial transmission path (8) is formed by a bus system.

11. The monitoring arrangement (1) according to one of claims 1 to 10, **characterised in that** information transmitted via the serial transmission path (8) is secured by checksums.

12. The monitoring arrangement (1) according to any one of claims 1 to 10, **characterised in that** the controller (3) is designed as a safe controller (3) and the optical sensor (6) is designed as a safe optical sensor (6).

13. The monitoring arrangement (1) according to one of claims 1 to 12, **characterised in that** the optical sensor (6) is a light sensor or distance sensor.

14. The monitoring arrangement (1) according to claim 13, **characterised in that** the optical sensor (6) is a scanning system.

15. The monitoring arrangement (1) according to one of claims 1 to 12, **characterised in that** the optical sensor (6) is a light curtain.

16. A method for operating a monitoring arrangement (1) for a plant (2), the monitoring arrangement (1) having a controller (3) which controls the plant (2) and an optical sensor (6) which has an evaluation unit and a sensor component, the controller (3) and the optical sensor (6) being connected via a serial transmission path (8), **characterised in that** the optical sensor (6) is configured by means of the controller (3), **in that** preprocessing of individual sensor information of the sensor component is carried out as a function of the configuration in the evaluation unit of the optical sensor (6) and partial results are generated therefrom, and **in that** these partial results are transmitted to the controller (3) for further processing.

## Revendications

1. Dispositif de surveillance (1) pour une installation (2) avec une commande (3) commandant l'installation (2) et avec un capteur optique (6) présentant une unité d'évaluation et un composant de capteur, la commande (3) et le capteur optique (6) étant reliés par une voie de transmission sérielle (8), **caractérisé en ce que** le capteur optique (6) peut être configuré au moyen de la commande (3) et **en ce que** le capteur optique est configuré à cet effet,
**en ce que**, en fonction de la configuration dans l'unité d'évaluation du capteur optique (6), un prétraitement d'informations de capteur individuelles du composant de capteur est effectué et des résultats partiels sont générés à partir de là, et **en ce que** ces résultats partiels sont transmis à la commande (3) pour un traitement ultérieur.

2. Dispositif de surveillance (1) selon la revendication 1, **caractérisé en ce que** le capteur optique (6) est configurable **en ce que** des règles d'évaluation pour la réalisation du prétraitement lui sont transmises par le système de commande (3).

3. Dispositif de surveillance (1) selon l'une des revendications 1 ou 2, **caractérisé en ce que** le capteur optique (6) est configuré pour effectuer différents prétraitements.

4. Dispositif de surveillance (1) selon l'une des revendications 1 à 3, **caractérisé en ce qu'**un groupe de composants de capteur est réuni dans le capteur optique (6) pour des prétraitements individuels dans chaque cas.

5. Dispositif de surveillance (1) selon l'une des revendications 1 à 4, **caractérisé en ce que** le capteur optique (6) est conçu pour surveiller une zone de surveillance (7), et **en ce qu'**une zone partielle de la zone de surveillance (7) est détectée avec un prétraitement.

6. Dispositif de surveillance (1) selon l'une des revendications 2 à 5, **caractérisé en ce que** le mode de détection d'un objet est prédéterminé par des règles d'évaluation d'un prétraitement.

7. Dispositif de surveillance (1) selon l'une des revendications 2 à 6, **caractérisé en ce qu'**une évaluation de l'amplitude peut être prédéfinie par des règles d'évaluation d'un prétraitement.

8. Dispositif de surveillance (1) selon l'une des revendications 1 à 7, **caractérisé en ce que** le contrôleur (3) est conçu pour le traitement logique de résultats partiels du capteur optique (6).

9. Dispositif de surveillance (1) selon l'une des revendications 1 à 7, **caractérisé en ce que** le contrôleur (3) est configuré pour générer un ou plusieurs signaux de commande pour l'installation (2) à partir des résultats partiels du capteur optique (6).

10. Dispositif de surveillance (1) selon l'une des revendications 1 à 9, **caractérisé en ce que** la voie de transmission série (8) est formée par un système de bus.

11. Dispositif de surveillance (1) selon l'une des revendications 1 à 10, **caractérisé en ce que** les informations transmises par la voie de transmission série (8) sont sécurisées par des sommes de contrôle.

12. Dispositif de surveillance (1) selon l'une quelconque des revendications 1 à 10, **caractérisé en ce que** le contrôleur (3) est conçu comme dispositif de commande fiable (3) et le capteur optique (6) est conçu comme un capteur optique fiable (6).

13. Dispositif de surveillance (1) selon l'une des revendications 1 à 12, **caractérisé en ce que** le capteur optique (6) est un capteur de lumière ou un capteur de distance.

14. Dispositif de surveillance (1) selon la revendication 13, **caractérisé en ce que** le capteur optique (6) est un système de balayage.

15. Dispositif de surveillance (1) selon l'une des revendications 1 à 12, **caractérisé en ce que** le capteur optique (6) est un rideau lumineux.

16. Procédé d'exploitation d'un dispositif de surveillance (1) pour une installation (2), le dispositif de surveillance (1) comportant une commande (3) qui commande l'installation (2) et un capteur optique (6) qui présente une unité d'évaluation et un composant de capteur, la commande (3) et le capteur optique (6) étant reliés par une voie de transmission sérielle (8), **caractérisé en ce que** le capteur optique (6) est configuré au moyen de la commande (3), **en ce qu'**un prétraitement d'informations de capteur individuelles du composant de capteur est effectué en fonction de la configuration dans l'unité d'évaluation du capteur optique (6) et des résultats partiels sont générés à partir de là, et **en ce que** ces résultats partiels sont transmis à la commande (3) pour un traitement ultérieur.
